# FASCICULE DE BREVET EUROPEEN

(11) **EP 3 101 312 B1**
(45) Date de publication et mention de la délivrance du brevet: **27.09.2017**
(21) Numéro de dépôt: 16169705.7
(22) Date de dépôt: 13.05.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 01.06.2015 FR 1554940
(43) Date de publication de la demande: 07.12.2016
(73) Titulaire: Valeo Embrayages, 80009 Amiens Cedex 2 (FR)
(72) Inventeur: CAILLERET, Franck, 80009 AMIENS (FR); VERHOOG, Roel, 60190 GOURNAY SUR ARONDE (FR)
(74) Mandataire: Cardon, Nicolas

(56) Documents cités:
- US-A1- 2013 233 125

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support. Le déplacement par rapport au support de chaque corps pendulaire est généralement guidé par deux organes de roulement coopérant chacun d'une part avec une piste de roulement solidaire du support, et d'autre part avec une ou plusieurs pistes de roulement solidaires du corps pendulaire.

Chaque organe de roulement est alors reçu dans une fenêtre ménagée dans le support et propre à cet organe de roulement, une partie du contour de cette fenêtre formant la piste de roulement solidaire du support. Il est alors nécessaire de réaliser deux fois plus de fenêtres dans le support qu'il n'y a de corps pendulaires. Lorsque chaque corps pendulaire comprend deux masses pendulaires rivetées entre elles et que ces rivets sont chacun reçus dans une ouverture propre et distincte d'une fenêtre précitée, par exemple selon ce qui est divulgué dans la demande DE 10 2006 028 556, le nombre de passages à ménager dans le support augmente encore.

L'état de la technique plus proche est illustré par le document US 2013/233125 A1. Il existe ainsi un besoin pour simplifier la réalisation du support d'un dispositif d'amortissement d'oscillations de torsion de type pendulaire, sans affecter les performances de filtrage fournies par ce dispositif.

L'invention vise à répondre à ce besoin, et elle y parvient, selon l'un de ses aspects, à l'aide d'un dispositif d'amortissement d'oscillations de torsion, comprenant :
- un support apte à se déplacer en rotation autour d'un axe,
- une pluralité de corps pendulaires, chaque corps pendulaire étant mobile par rapport au support, et
- une pluralité d'organes de roulement, chaque organe de roulement coopérant avec une première piste de roulement solidaire du support et avec au moins une deuxième piste de roulement solidaire d'un corps pendulaire, le déplacement de chaque corps pendulaire par rapport au support étant guidé par deux de ces organes de roulement,
le support comprenant une pluralité de fenêtres dans chacune desquelles deux organes de roulement sont reçus, l'un de ces organes de roulement coopérant avec au moins une deuxième piste de roulement solidaire d'un des corps pendulaires et l'autre de ces organes de roulement coopérant avec au moins une deuxième piste de roulement solidaire d'un autre de ces corps pendulaires, lesdits corps pendulaires étant voisins circonférentiellement.

Selon l'invention, chaque fenêtre ménagée dans le support reçoit deux organes de roulement associés à des corps pendulaires distincts. On réduit ainsi au moins par deux le nombre de fenêtres à ménager dans le support par rapport aux dispositifs selon l'art antérieur. Un tel support est ainsi plus facile à réaliser et sa tenue mécanique peut être améliorée.

Chacune de ces fenêtres peut présenter un contour fermé, et une partie de ce contour peut alors définir la première piste de roulement avec laquelle coopère l'un des organes de roulement reçu dans cette fenêtre et guidant le déplacement d'un des corps pendulaires, tandis qu'une autre partie de ce contour définit la première piste de roulement avec laquelle coopère l'autre organe de roulement reçu dans cette fenêtre et guidant le déplacement du corps pendulaire voisin circonférentiellement.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos du dispositif est celle dans laquelle les corps pendulaires sont soumis à une force centrifuge, mais non à des oscillations de torsion provenant des acyclismes du moteur thermique.

Chaque organe de roulement peut coopérer avec la piste de roulement solidaire du support et avec la ou les pistes de roulement solidaires du corps pendulaire uniquement via sa surface extérieure. Ainsi, une même portion de cette surface extérieure peut rouler alternativement sur la piste de roulement solidaire du support et sur une piste de roulement solidaire du corps pendulaire lorsque l'organe de roulement se déplace.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

La forme des premières et des deuxièmes pistes de roulement peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple un nombre compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Selon un premier exemple de mise en oeuvre de l'invention, chaque corps pendulaire peut comprendre deux premiers organes d'amortissement de butée, chaque premier organe d'amortissement de butée faisant circonférentiellement saillie en direction du corps pendulaire voisin circonférentiellement, de manière à ce que deux premiers organes d'amortissement de butée circonférentiellement en regard et appartenant respectivement à deux corps pendulaires voisins circonférentiellement puissent venir en contact l'un avec l'autre lors d'un déplacement de ces corps pendulaires, chaque premier organe d'amortissement de butée étant disposé dans une des fenêtres du support.

Deux premiers organes d'amortissement de butée circonférentiellement en regard et portés par des corps pendulaires voisins circonférentiellement peuvent être reçus au moins en partie dans une même fenêtre du support.

Chaque premier organe d'amortissement de butée est par exemple exclusivement contenu dans une fenêtre du support En variante, chaque premier organe d'amortissement de butée peut non seulement s'étendre dans une fenêtre ménagée dans le support mais également faire saillie axialement de part et d'autre de cette fenêtre. Comme on le verra par la suite, chaque corps pendulaire peut comprendre deux masses pendulaires entre lesquelles le support est axialement disposé, et il peut alors exister des plans perpendiculaires à l'axe de rotation du support dans lesquels le premier organe d'amortissement de butée est disposé au-delà d'une extrémité circonférentielle d'une masse pendulaire.

Selon un deuxième exemple de mise en oeuvre de l'invention, le dispositif peut comprendre une pluralité d'organes de synchronisation connectant deux à deux des corps pendulaires voisins circonférentiellement, chaque organe de synchronisation étant disposé dans une des fenêtres du support. De tels organes de synchronisation empêchent les corps pendulaires d'effectuer des mouvements relatifs asynchrones et améliorent ainsi l'effet d'amortissement.

Chaque fenêtre du support reçoit alors un organe de roulement guidant le déplacement d'un corps pendulaire, un organe de roulement guidant le déplacement d'un autre corps pendulaire voisin circonférentiellement, et l'organe de synchronisation connectant lesdits corps pendulaires.

Chaque organe de synchronisation peut être rigidement couplé aux deux corps pendulaires qu'il connecte. En variante, chaque organe de synchronisation est articulé sur chacun de ces corps pendulaires, étant par exemple une biellette montée pivotante sur chacun de ces corps pendulaires.

Chaque organe de synchronisation peut ou non être déformable.

Selon l'un ou l'autre des exemples de mise en oeuvre ci-dessus, chaque corps pendulaire peut comprendre au moins un deuxième organe d'amortissement de butée contre le support. Chaque corps pendulaire comprend par exemple deux deuxièmes organes d'amortissement de butée. Chacun de ces deuxièmes organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos, ou
- à l'issue d'un déplacement dans le sens non-trigonométrique de ce corps pendulaire depuis la position de repos, ou
- en cas de chute radiale du corps pendulaire, par exemple lors de l'arrêt du moteur thermique du véhicule.

Le cas échéant, chaque deuxième organe d'amortissement de butée peut amortir la butée du corps pendulaire contre le support à l'issue d'un déplacement dans le sens trigonométrique, respectivement non-trigonométrique, depuis la position de repos, mais également en cas de chute radiale du corps pendulaire.

Chaque premier et chaque deuxième organe d'amortissement de butée peuvent présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

Selon le premier exemple de mise en oeuvre de l'invention, chaque premier organe d'amortissement de butée et un deuxième organe d'amortissement de butée peuvent former différentes parties d'une seule et même pièce. Autrement dit, chaque corps pendulaire peut alors comprendre au niveau de chacune de ses extrémités circonférentielles une pièce :
- dont une partie fait circonférentiellement saillie en direction du corps pendulaire voisin circonférentiellement, de manière à former un premier organe d'amortissement de butée, et
- dont une autre partie forme un deuxième organe d'amortissement de butée.

Selon le deuxième exemple de mise en oeuvre de l'invention, chaque organe de synchronisation et chaque deuxième organe d'amortissement de butée peuvent former différentes parties d'une seule et même pièce. Autrement dit, chaque corps pendulaire peut comprendre au niveau de chacune de ses extrémités circonférentielles une pièce :
- dont une partie forme un organe de synchronisation,
- dont une autre partie forme un deuxième organe d'amortissement de butée de ce corps pendulaire, et
- dont une autre partie s'étend dans le corps pendulaire voisin circonférentiellement et forme un deuxième organe d'amortissement de butée de ce corps pendulaire voisin circonférentiellement.

Dans tout ce qui précède, chaque corps pendulaire peut comprendre :
- une première et une deuxième masses pendulaires espacées axialement l'une par rapport à l'autre, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires, appariant lesdites masses.

Dans ce cas, le deuxième organe d'amortissement de butée peut s'étendre autour de tout ou partie d'un organe de liaison.

Chaque corps pendulaire peut s'étendre angulairement sur une valeur d'angle globale mesurée depuis l'axe de rotation entre deux extrémités circonférentielles qui correspondent aux extrémités circonférentielles des masses pendulaires de ce corps, chaque deuxième piste de roulement étant disposée à l'intérieur d'un secteur angulaire mesuré depuis l'axe de rotation et s'étendant depuis une extrémité circonférentielle du corps pendulaire en direction de l'autre extrémité circonférentielle de ce corps pendulaire, le rapport entre ce secteur angulaire et l'angle global étant compris entre 1/15 et 1/2, étant par exemple compris entre 0,1 et 0, 25.

Une telle position des deuxièmes pistes de roulement permet de déporter angulairement chaque organe de roulement le plus vers l'extérieur du corps pendulaire. De cette façon, le mouvement de chaque corps pendulaire est plus précis et plus stable à tolérance de fabrication constante. L'amplitude du débattement de chaque corps pendulaire peut par ailleurs être augmentée. Une telle position des organes de roulement peut encore augmenter l'inertie polaire du corps pendulaire, ce qui est avantageux lorsque ce corps pendulaire présente le mouvement combiné mentionné précédemment.

La deuxième piste de roulement solidaire du corps pendulaire peut être définie par l'organe de liaison. Une portion du contour de cet organe de liaison définit par exemple la deuxième piste de roulement. Un tel organe de liaison est par exemple emmanché en force via chacune de ses extrémités axiales dans une ouverture ménagée dans une des masses pendulaires. En variante, l'organe de liaison peut être soudé via ses extrémités axiales sur chaque masse pendulaire.

Chaque corps pendulaire peut alors comprendre deux organes de liaison appariant la première et la deuxième masse pendulaires, chaque organe de liaison définissant une deuxième piste de roulement coopérant respectivement avec l'un des deux organes de roulement guidant le déplacement de ce corps pendulaire par rapport au support. Chaque organe de roulement coopère alors avec une seule deuxième piste de roulement.

Dans ce cas, chaque fenêtre recevant deux organes de roulement peut recevoir également un organe de liaison d'un corps pendulaire et un organe de liaison du corps pendulaire voisin circonférentiellement. Dans chaque fenêtre se trouve alors :
- un organe de liaison d'un corps pendulaire et un organe de roulement guidant le déplacement de ce corps pendulaire, et
- un organe de liaison d'un autre corps pendulaire et un organe de roulement guidant le déplacement de cet autre corps pendulaire.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Un tel dispositif d'amortissement d'oscillations de torsion présente ainsi un nombre de passages ménagés dans le support très réduit puisque, pour un nombre n de corps pendulaires, n fenêtres permettent le guidage de ces n corps pendulaires et la liaison entre les masses pendulaires de chacun de ces corps pendulaires. Lorsque les deuxièmes pistes de roulement sont déportées angulairement vers l'extérieur des corps pendulaires, comme mentionné précédemment, ces fenêtres peuvent présenter une dimension angulaire particulièrement réduite.

En variante, chaque organe de roulement peut coopérer avec deux deuxièmes pistes de roulement solidaires du corps pendulaire, l'une de ces deuxièmes pistes de roulement étant définie par la première masse pendulaire et l'autre de ces deuxièmes pistes de roulement étant définie par la deuxième masse pendulaire. Chaque organe de liaison est alors par exemple un rivet, étant reçu dans une ouverture du support différente de la fenêtre dans laquelle un organe de roulement est reçu. Chaque organe de roulement peut alors comprendre successivement axialement:
- une portion disposée dans une cavité de la première masse pendulaire et coopérant avec la deuxième piste de roulement formée par une partie du contour de cette cavité,
- une portion disposée dans une fenêtre du support et coopérant avec la première piste de roulement formée par une partie du contour de cette fenêtre, et
- une portion disposée dans une cavité de la deuxième masse pendulaire et coopérant avec la deuxième piste de roulement formée par une partie du contour de cette cavité.

Selon cette variante, chaque corps pendulaire peut comprendre au moins un, notamment deux, organe de liaison appariant la première et la deuxième masses pendulaires, tous les organes de liaison de ce corps pendulaire étant disposés dans l'espace angulaire défini entre les deux organes de roulement guidant le déplacement de ce corps pendulaire par rapport au support. Le ou les organes de liaison peuvent alors être disposés dans la zone centrale, angulairement parlant, du corps pendulaire.

Toujours selon cette variante dans laquelle deux deuxièmes pistes de roulement solidaires du corps pendulaires sont prévues, mais de façon alternative au paragraphe qui précède, il est possible que tout ou partie des organes de liaison du corps pendulaire soient reçus dans des fenêtres recevant déjà des organes de roulement. Chaque fenêtre ménagée dans le support reçoit par exemple alors :
- un organe de liaison d'un corps pendulaire et un organe de roulement guidant le déplacement de ce corps pendulaire, et
- un organe de liaison d'un autre corps pendulaire et un organe de roulement guidant le déplacement de cet autre corps pendulaire.

Dans ce cas, les organes de roulement sont alors disposés radialement extérieurement par rapport aux organes de liaison. Similairement à ce qui a été mentionné précédemment, le nombre d'ouvertures ménagées dans le support pour permettre le guidage des corps pendulaires et la liaison entre les masses pendulaires de chacun de ces corps pendulaires est alors particulièrement réduit.

Dans tout ce qui précède, le dispositif peut comprendre au moins une pièce d'interposition dont au moins une partie est axialement disposée entre le support et une masse pendulaire du corps pendulaire. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

L'invention a encore pour objet, selon un autre de ses aspects, un composant pour système de transmission d'un véhicule automobile, le composant étant notamment un double volant amortisseur, un convertisseur de couple hydrodynamique ou un disque d'embrayage à friction, ou un double embrayage à sec ou humide ou un embrayage simple humide ou un volant solidaire d'un vilebrequin, ce composant comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un dispositif d'amortissement d'oscillations de torsion selon un premier exemple de mise en oeuvre de l'invention,
- la figure 2 est un détail de la figure 1,
- la figure 3 est une vue similaire à la figure 2 d'un deuxième exemple de mise en oeuvre de l'invention,
- les figures 4 et 5 sont différentes vues d'une variante du deuxième exemple de mise en oeuvre de l'invention,
- la figure 6 représente similairement à la figure 1 un autre dispositif d'amortissement d'oscillations de torsion selon l'invention, et
- les figures 7 et 8 représentent un détail d'un autre dispositif d'amortissement d'oscillations de torsion selon l'invention.

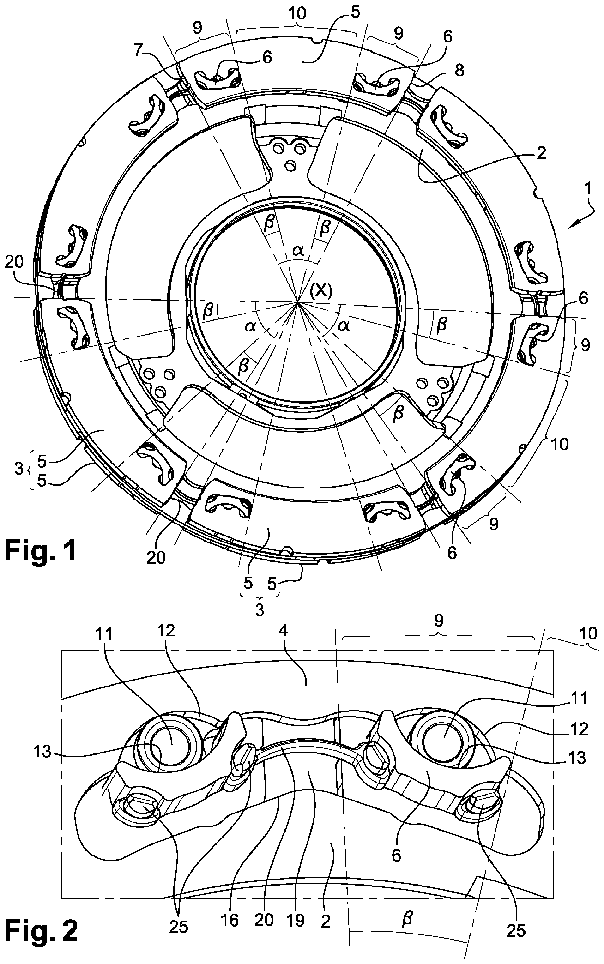

On a représenté sur la figure 1 un dispositif d'amortissement 1 d'oscillations de torsion selon un exemple de mise en oeuvre de l'invention. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque d'embrayage.

Ce composant peut faire partie d'une chaîne de propulsion d'un véhicule automobile, cette dernière comprenant un moteur thermique notamment à trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, six corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur,
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Dans l'exemple considéré, le support 2 présente globalement une forme d'anneau comportant deux côtés opposés 4 qui sont ici des faces planes.

Comme on peut notamment le voir sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

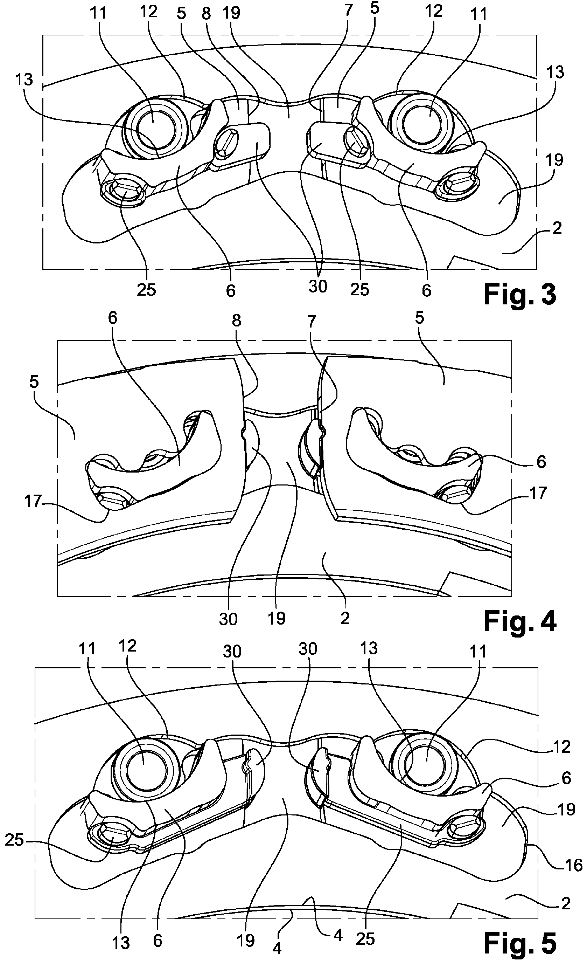

Sur les figures 2 et 3, l'une des masses pendulaires 5 n'est pas représentée, de manière à mieux voir le support 2.

Les organes de liaison 6, encore appelés « entretoises », sont dans l'exemple considéré décalés angulairement. Chaque organe de liaison 6 est ici déporté angulairement vers l'extérieur de chaque corps pendulaire 3. Chaque corps 3 s'étend angulairement sur une valeur d'angle globale α mesurée depuis l'axe de rotation X du support 2 entre deux extrémités circonférentielles, qui correspondent respectivement aux extrémités circonférentielles 7 et 8 des masses pendulaires 5 de ce corps, et chaque organe de liaison 6 est alors disposé à l'intérieur d'une zone périphérique 9 du corps pendulaire, cette zone périphérique 9 s'étendant depuis une extrémité 7 ou 8 du corps pendulaire 3 en direction de l'autre extrémité 8 ou 7 de ce corps pendulaire sur un secteur angulaire β mesuré depuis l'axe X, le rapport β/α étant compris entre 1/15 et 1/ 2, étant notamment compris entre 0,1 et 0,25. Autrement dit, et comme cela est notamment visible sur la figure 1, chaque corps pendulaire 3 comprend dans l'exemple décrit, lorsque l'on se déplace à l'intérieur de ce corps pendulaire 3 depuis une extrémité circonférentielle 7 vers son autre extrémité circonférentielle 8 successivement :
- une zone périphérique 9 dans laquelle est disposé un des organes de liaison 6 du corps pendulaire 3,
- une zone centrale 10 dépourvue d'organe de liaison 6, et
- une autre zone périphérique 9 dans laquelle est disposé l'autre organe de liaison 6 du corps pendulaire 3.

Dans l'exemple des figures 1 à 5, chaque extrémité d'un organe de liaison 6 est emmanchée en force dans une ouverture 17 ménagée dans une des masses pendulaires 5 du corps pendulaire 3, de manière à solidariser entre elles ces deux masses pendulaires 5. En variante, chaque extrémité d'un organe de liaison est solidarisée à une des masses pendulaires 5 par soudure.

Le dispositif 1 comprend encore des organes de roulement 11 guidant le déplacement des corps pendulaires 3 par rapport au support 2. Les organes de roulement 11 sont ici des rouleaux présentant plusieurs diamètres successifs différents.

Dans l'exemple décrit, le mouvement par rapport au support 2 de chaque corps pendulaire 3 est guidé par deux organes de roulement 11.

Chaque organe de roulement 11 est reçu dans une fenêtre 19 ménagée dans le support 2. Comme représenté sur les figures, deux organes de roulement 11 associés à deux corps pendulaires 3 différents et voisins circonférentiellement sont reçus dans une même fenêtre 19 ménagée dans le support 2. Autrement dit, à l'intérieur d'une même fenêtre 19, est reçu un organe de roulement 11 guidant le déplacement d'un corps pendulaire 3 et un organe de roulement 11 guidant le déplacement d'un autre corps pendulaire 3 qui est circonférentiellement voisin. Chaque fenêtre 19 présente un contour fermé 16 et une partie de ce contour 16 définit une première piste de roulement 12 solidaire du support 2, sur laquelle l'un des organes de roulement 11 reçus dans cette fenêtre 19 va rouler, tandis qu'une autre partie de ce contour fermé 16 définit une autre première piste de roulement 12 solidaire du support 2, sur laquelle l'autre organe de roulement 11 reçu dans la fenêtre 19 va rouler.

Dans l'exemple des figures 1 à 5, chaque fenêtre 19 reçoit par ailleurs :
- un organe de liaison 6 d'un corps pendulaire 3, et
- un organe de liaison 6 d'un autre corps pendulaire 3 qui est voisin circonférentiellement.

Chaque organe de liaison 6 définit dans l'exemple des figures 1 à 5 une deuxième piste de roulement 13 qui est solidaire du corps pendulaire 3 auquel cet organe de liaison 6 appartient et sur laquelle roule un des organes de roulement 11 pour guider le déplacement de ce corps pendulaire 3 par rapport au support 2.

Dans l'exemple des figures 1 et 2, des organes de synchronisation 20 sont prévus. Chaque organe de synchronisation 20 est ici interposé entre deux corps pendulaires 3 voisins circonférentiellement qu'il connecte entre eux. Chaque organe de synchronisation 20 est ici solidaire de chacun des corps pendulaires 3 qu'il connecte.

Chaque corps pendulaire 3 comprend également deux deuxièmes organes d'amortissement de butée 25 de ce corps pendulaire contre le support 2. L'un de ces deuxièmes organes d'amortissement de butée 25 vient par exemple en contact avec le support 2 à l'issue d'un déplacement dans le sens trigonométrique du corps pendulaire 3 depuis sa position de repos, et également en cas de chute radiale de ce corps pendulaire 3, tandis que l'autre deuxième organe d'amortissement de butée 25 vient en contact avec le support 2 à l'issue d'un déplacement dans le sens non-trigonométrique du corps pendulaire 3 depuis sa position de repos, et le cas échéant également en cas de chute radiale de ce corps pendulaire 3.

Chaque deuxième organe d'amortissement de butée 25 est par exemple radialement positionné entre un organe de liaison 6 et le contour 16 de la fenêtre 19. Chaque deuxième organe d'amortissement de butée 25 s'étend dans l'exemple des figures 1 et 2 entre deux extrémités axiales, chacune d'entre elles étant reçue dans un trou ménagé dans une des masses pendulaires 5, de manière à solidariser ce deuxième organe d'amortissement de butée 25 à chacune de ces masses pendulaires 5.

Comme on peut le voir sur la figure 2, chaque deuxième organe d'amortissement de butée 25 peut être réalisé en plusieurs parties, et l'une de ces parties peut former une seule pièce avec un organe de synchronisation 20, cette pièce étant ici en élastomère.

Les figures 3 à 5 représentent différentes variantes d'un deuxième exemple de mise en oeuvre de l'invention. Sur les figures 3 à 5, l'une des masses pendulaires 5 du corps pendulaire 3 n'est pas représentée. Ce deuxième exemple de mise en oeuvre diffère de celui décrit en référence aux figures 1 et 2 par le fait que le dispositif 1 est dépourvu d'organes de synchronisation 20.

Chaque corps pendulaire 3 comprend selon ce deuxième exemple deux premiers organes d'amortissement de butée 30, chaque premier organe d'amortissement de butée 30 faisant circonférentiellement saillie au-delà d'une des extrémités circonférentielles 7 et 8 du corps pendulaire 3 en direction du corps pendulaire 3 voisin circonférentiellement. De cette manière, deux premiers organes d'amortissement de butée 30 circonférentiellement en regard et appartenant respectivement à deux corps pendulaires 3 voisins circonférentiellement peuvent venir en contact l'un avec l'autre lors d'un déplacement de ces corps pendulaires 3. Ces premiers organes d'amortissement de butée 30 circonférentiellement en regard sont, comme représenté sur la figure 3, reçus dans une même fenêtre 19 ménagée dans le support 2.

Comme on peut le voir sur les figures 3 à 5, chaque premier organe de d'amortissement de butée 30 est disposé au moins en partie dans une fenêtre 19.

Toujours selon les figures 3 à 5, chaque premier organe d'amortissement de butée 30 est réalisé d'une seule pièce avec tout ou partie d'un deuxième organe d'amortissement de butée 25. Cette pièce est par exemple réalisée en élastomère ou en caoutchouc.

Dans l'exemple de la figure 3, chaque premier organe d'amortissement de butée 30 s'étend exclusivement à l'intérieur d'une fenêtre 19.

Dans l'exemple des figures 4 et 5, chaque premier organe d'amortissement de butée 30 s'étend non seulement à l'intérieur d'une fenêtre 19, mais également axialement de part et d'autre de cette fenêtre 19. Chaque premier organe d'amortissement de butée 30 s'étend par exemple le long d'une extrémité circonférentielle 7 ou 8 du corps pendulaire 3.

Comme on peut le voir sur la figure 5, lorsque chaque deuxième organe d'amortissement de butée 25 est d'un seul tenant, une seule et même pièce peut former à la fois un premier organe d'amortissement de butée 30 et un deuxième organe d'amortissement de butée 25.

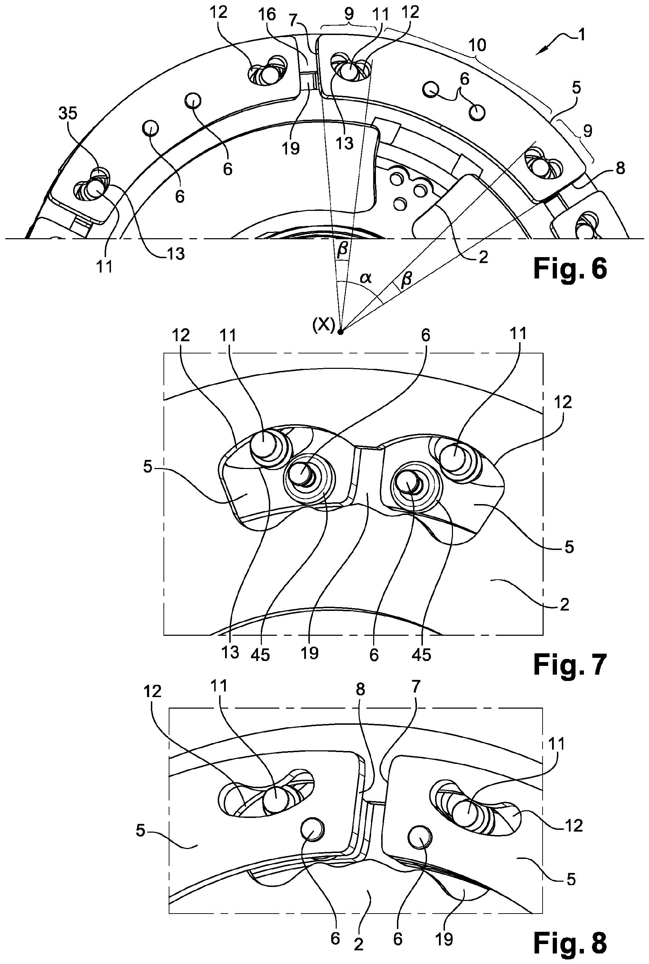

On va maintenant décrire en référence aux figures 6 à 8 d'autres exemples de dispositifs d'amortissement d'oscillations de torsion 1 selon l'invention. Les exemples des figures 6 à 8 diffèrent de ce qui a été décrit en référence aux figures 1 à 5 par le fait que chaque organe de roulement 11 coopère avec deux deuxièmes pistes de roulement 13 qui ne sont pas définies par un organe de liaison 6. L'une de ces deuxièmes pistes de roulement 13 est définie par une partie du contour d'une cavité 35 ménagée dans la première masse pendulaire 5 tandis que l'autre de ces deuxièmes pistes de roulement 13 est définie par une partie du contour d'une cavité 35 ménagée dans la deuxième masse pendulaire 5 du corps pendulaire 3.

Chaque organe de roulement 11 comprend successivement axialement dans l'exemple de la figure 7:
- une portion disposée dans une cavité 35 de la première masse pendulaire 5 et coopérant avec la deuxième piste de roulement 13 formée par une partie du contour de cette cavité 35,
- une portion disposée dans une fenêtre 19 du support 2 et coopérant avec la première piste de roulement 12 formée par une partie du contour de cette fenêtre 19, et
- une portion disposée dans une cavité 35 de la deuxième masse pendulaire 5 et coopérant avec la deuxième piste de roulement 13 formée par une partie du contour de cette cavité 35.

Chaque corps pendulaire 3 comprend encore des organes de liaison 6 appariant les deux masses pendulaires 5 de ce corps pendulaire 3, mais ces organes de liaison 6 sont différents de ceux décrits en référence aux figures 1 à 6. Les organes de liaison 6 sont ici des rivets. Chaque rivet 6 est par exemple muni d'un organe d'amortissement de butée 45 visible sur la figure 7, ce dernier se présentant sous la forme d'une bague réalisée en un matériau tel que de l'élastomère.

Dans l'exemple de la figure 6, les rivets 6 sont disposés dans la zone centrale 10 d'un corps pendulaire 3 et traversent une cavité du support 2 différente d'une fenêtre 19. Chaque corps pendulaire 3 comprend dans cet exemple deux rivets 6 qui sont angulairement entourés de chaque côté par un organe de roulement 11. Similairement à ce qui a été décrit précédemment, chaque fenêtre 19 ménagée dans le support reçoit d'une part un organe de roulement 11 guidant le déplacement d'un corps pendulaire 3 et d'autre part un organe de roulement 11 guidant le déplacement d'un autre corps pendulaire 3 voisin circonférentiellement.

Les figures 7 et 8 différent de ce qui vient d'être décrit en référence à la figure 6 par le fait que des rivets 6 sont également reçus dans des fenêtres 19. Autrement dit, et comme on peut le voir sur la figure 7, chaque fenêtre ménagée 19 dans le support 2 reçoit alors :
- un rivet 6 d'un corps pendulaire 3 et un organe de roulement 11 guidant le déplacement de ce corps pendulaire 3, et
- un rivet 6 d'un autre corps pendulaire 3 et un organe de roulement 11 guidant le déplacement de cet autre corps pendulaire 3.

Sur la figure 7, les corps pendulaires 3 ne sont pas représentés en totalité, l'une des masses pendulaires 5 de chaque corps pendulaire 3 n'étant pas représentée, pour des raisons de clarté du dessin.

Bien que non représentés sur les figures 6 à 8, le dispositif 1 selon ces figures peut comprendre des organes de synchronisation similaires à ceux décrits en référence aux figures 1 et 2 ou des premiers organes d'amortissement de butée similaires à ceux décrits en référence aux figures 3 à 5.

L'invention n'est pas limitée aux exemples qui viennent d'être décrits.

## Revendications

1. Dispositif d'amortissement d'oscillations de torsion (1), comprenant :
- un support (2) apte à se déplacer en rotation autour d'un axe (X),
- une pluralité de corps pendulaires (3), chaque corps pendulaire (3) étant mobile par rapport au support (2), et
- une pluralité d'organes de roulement (11), chaque organe de roulement (11) coopérant avec une première piste de roulement (12) solidaire du support (2) et avec au moins une deuxième piste de roulement solidaire (13) d'un corps pendulaire (3), le déplacement de chaque corps pendulaire (3) par rapport au support (2) étant guidé par deux de ces organes de roulement (11),
le support (2) comprenant une pluralité de fenêtres (19) dans chacune desquelles deux organes de roulement (11) sont reçus, et **caractérisé en ce que** l'un de ces organes de roulement (11) coopérant avec au moins une
deuxième piste de roulement (13) solidaire d'un des corps pendulaires (3) et l'autre de ces organes de roulement (11) coopérant avec au moins une deuxième piste de roulement (13) solidaire d'un autre de ces corps pendulaires (3), lesdits corps pendulaires (3) étant voisins circonférentiellement.

2. Dispositif selon la revendication 1, chaque corps pendulaire (3) comprenant deux premiers organes d'amortissement de butée (30), chaque premier organe d'amortissement de butée (30) faisant circonférentiellement saillie en direction du corps pendulaire (3) voisin circonférentiellement, de manière à ce que deux premiers organes d'amortissement de butée (30) circonférentiellement en regard et appartenant respectivement à deux corps pendulaires (3) voisins circonférentiellement puissent venir en contact l'un avec l'autre lors d'un déplacement de ces corps pendulaires (3), chaque premier organe de d'amortissement de butée (30) étant disposé dans une des fenêtres (19) du support (2).

3. Dispositif selon la revendication 1, comprenant une pluralité d'organes de synchronisation (20) connectant deux à deux des corps pendulaires (3) voisins circonférentiellement, chaque organe de synchronisation (20) étant disposé dans une des fenêtres (19) du support (2).

4. Dispositif selon l'une quelconque des revendications précédentes, chaque corps pendulaire (3) comprenant au moins un deuxième organe d'amortissement de butée (25) contre le support (2).

5. Dispositif selon l'une quelconque des revendications précédentes, chaque corps pendulaire (3) comprenant :
- une première et une deuxième masses pendulaires (5) espacées axialement l'une par rapport à l'autre, la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5), appariant lesdites masses.

6. Dispositif selon la revendication 5, chaque corps pendulaire (3) s'étendant angulairement sur une valeur d'angle globale (α) mesurée depuis l'axe de rotation (X) entre deux extrémités circonférentielles (7, 8) qui correspondent aux extrémités circonférentielles des masses pendulaires (5) de ce corps (3), chaque deuxième piste de roulement (13) étant disposée à l'intérieur d'un secteur angulaire (β) mesuré depuis l'axe de rotation (X) et s'étendant depuis une extrémité circonférentielle (7, 8) du corps pendulaire (3) en direction de l'autre extrémité circonférentielle (7, 8) de ce corps pendulaire (3), le rapport entre ce secteur angulaire (β) et l'angle global (α) étant compris entre 1/15 et 1/2.

7. Dispositif selon la revendication 5 ou 6, la deuxième piste de roulement (13) solidaire du corps pendulaire (3) étant définie par l'organe de liaison (6).

8. Dispositif selon la revendication 7, chaque corps pendulaire (3) comprenant deux organes de liaison (6) appariant la première (5) et la deuxième (5) masse pendulaires, chaque organe de liaison (6) définissant une deuxième piste de roulement (13) coopérant respectivement avec l'un des deux organes de roulement (11) guidant le déplacement de ce corps pendulaire (3) par rapport au support (2).

9. Dispositif selon la revendication 5 ou 6, chaque organe de roulement (11) coopérant avec deux deuxièmes pistes de roulement (13) solidaires du corps pendulaire (3), l'une de ces deuxièmes pistes de roulement (13) étant définie par la première masse pendulaire (5) et l'autre de ces deuxièmes pistes de roulement (13) étant définie par la deuxième masse pendulaire (5).

10. Dispositif selon la revendication 9, chaque corps pendulaire (3) comprenant au moins un organe de liaison (6) appariant la première (5) et la deuxième (5) masse pendulaire.

11. Dispositif selon la revendication 10, tous les organes de liaison (6) du corps pendulaire (3) étant disposés dans l'espace angulaire défini entre les deux organes de roulement (11) guidant le déplacement de ce corps pendulaire (3) par rapport au support (2).

12. Dispositif selon la revendication 8 ou 10, chaque fenêtre (19) recevant :
- un organe de roulement (11) coopérant avec au moins une deuxième piste de roulement (13) solidaire d'un des corps pendulaires (3),
- un organe de liaison (6) appariant la première (5) et la deuxième (5) masse pendulaire de ce corps pendulaire (3),
- l'autre organe de roulement (11) coopérant avec au moins une deuxième piste de roulement (13) solidaire de l'autre corps pendulaire (3), lesdits corps pendulaires (3) étant voisins circonférentiellement, et
- un organe de liaison (6) appariant la première (5) et la deuxième (5) masse pendulaire de cet autre corps pendulaire (3).

13. Composant pour système de transmission d'un véhicule automobile, le composant étant notamment un double volant amortisseur, un convertisseur de couple hydrodynamique ou un disque d'embrayage à friction, ou un double embrayage à sec ou humide, ou un embrayage simple humide, ou un volant solidaire d'un vilebrequin, le composant comprenant un dispositif d'amortissement (1) selon l'une quelconque des revendications 1 à 12.

## Patentansprüche

1. Vorrichtung zur Dämpfung von Torsionsschwingungen (1), welche umfasst:
- einen Halter (2), der geeignet ist, eine Drehbewegung um eine Achse (X) auszuführen,
- mehrere Pendelkörper (3), wobei jeder Pendelkörper (3) bezüglich des Halters (2) beweglich ist, und
- mehrere Wälzkörper (11), wobei jeder Wälzkörper (11) mit einer ersten Laufbahn (12), die mit dem Halter (2) fest verbunden ist, und mit wenigstens einer zweiten Laufbahn (13), die mit einem Pendelkörper (3) fest verbunden ist, zusammenwirkt, wobei die Bewegung jedes Pendelkörpers (3) bezüglich des Halters (2) von zweien dieser Wälzkörper (11) geführt wird,
wobei der Halter (2) mehrere Fenster (19) umfasst, in denen jeweils zwei Wälzkörper (11) aufgenommen sind,
**dadurch gekennzeichnet, dass** einer dieser Wälzkörper (11) mit wenigstens einer zweiten Laufbahn (13) zusammenwirkt, die mit einem der Pendelkörper (3) fest verbunden ist, und der andere dieser Wälzkörper (11) mit wenigstens einer zweiten Laufbahn (13) zusammenwirkt, die mit einem anderen dieser Pendelkörper (3) fest verbunden ist, wobei diese Pendelkörper (3) in Umfangsrichtung benachbart sind.

2. Vorrichtung nach Anspruch 1, wobei jeder Pendelkörper (3) zwei erste Anschlagdämpfungsorgane (30) umfasst, wobei jedes erste Anschlagdämpfungsorgan (30) in Umfangsrichtung in Richtung des Pendelkörpers (3) vorsteht, der in Umfangsrichtung benachbart ist, derart, dass zwei erste Anschlagdämpfungsorgane (30), die einander in Umfangsrichtung gegenüberliegen und jeweils zu einem von zwei in Umfangsrichtung benachbarten Pendelkörpern (3) gehören, bei einer Verlagerung dieser Pendelkörper (3) miteinander in Kontakt kommen können, wobei jedes erste Anschlagdämpfungsorgan (30) in einem der Fenster (19) des Halters (2) angeordnet ist.

3. Vorrichtung nach Anspruch 1, welche mehrere Synchronisationsorgane (20) umfasst, die in Umfangsrichtung benachbarte Pendelkörper (3) paarweise verbinden, wobei jedes Synchronisationsorgan (20) in einem der Fenster (19) des Halters (2) angeordnet ist.

4. Vorrichtung nach einem der vorhergehenden Ansprüche, wobei jeder Pendelkörper (3) wenigstens ein zweites Organ zur Dämpfung des Anschlags (25) am Halter (2) umfasst.

5. Vorrichtung nach einem der vorhergehenden Ansprüche, wobei jeder Pendelkörper (3) umfasst:
- eine erste und eine zweite Pendelmasse (5), die axial voneinander beabstandet sind, wobei die erste Pendelmasse (5) axial auf einer ersten Seite (4) des Halters (2) angeordnet ist und die zweite Pendelmasse (5) axial auf einer zweiten Seite (4) des Halters (2) angeordnet ist, und
- wenigstens ein Organ zur Verbindung (6) der ersten und der zweiten Pendelmasse (5), das diese Massen zu einem Paar vereinigt.

6. Vorrichtung nach Anspruch 5, wobei sich jeder Pendelkörper (3) winkelmäßig über einen Gesamtwinkelwert (α) erstreckt, von der Drehachse (X) aus zwischen zwei Umfangsrichtungsenden (7, 8) gemessen, welche den Umfangsrichtungsenden der Pendelmassen (5) dieses Körpers (3) entsprechen, wobei jede zweite Laufbahn (13) innerhalb eines von der Drehachse (X) aus gemessenen Winkelsektors (β) angeordnet ist, der sich von einem Umfangsrichtungsende (7, 8) des Pendelkörpers (3) aus in Richtung des anderen Umfangsrichtungsendes (7, 8) dieses Pendelkörpers (3) erstreckt, wobei das Verhältnis zwischen diesem Winkelsektor (β) und dem Gesamtwinkel (α) zwischen 1/15 und 1/2 liegt.

7. Vorrichtung nach Anspruch 5 oder 6, wobei die zweite Laufbahn (13), die mit dem Pendelkörper (3) fest verbunden ist, durch das Verbindungsorgan (6) definiert ist.

8. Vorrichtung nach Anspruch 7, wobei jeder Pendelkörper (3) zwei Verbindungsorgane (6) umfasst, welche die erste (5) und die zweite (5) Pendelmasse zu einem Paar vereinigen, wobei jedes Verbindungsorgan (6) eine zweite Laufbahn (13) definiert, die jeweils mit einem der zwei Wälzkörper (11) zusammenwirkt, welche die Bewegung dieses Pendelkörpers (3) bezüglich des Halters (2) führen.

9. Vorrichtung nach Anspruch 5 oder 6, wobei jeder Wälzkörper (11) mit zwei zweiten Laufbahnen (13) zusammenwirkt, die mit dem Pendelkörper (3) fest verbunden sind, wobei eine dieser zweiten Laufbahnen (13) durch die erste Pendelmasse (5) definiert ist und die andere dieser zweiten Laufbahnen (13) durch die zweite Pendelmasse (5) definiert ist.

10. Vorrichtung nach Anspruch 9, wobei jeder Pendelkörper (3) wenigstens ein Verbindungsorgan (6) umfasst, das die erste (5) und die zweite (5) Pendelmasse zu einem Paar vereinigt.

11. Vorrichtung nach Anspruch 10, wobei alle Verbindungsorgane (6) des Pendelkörpers (3) in dem Winkelraum angeordnet sind, der zwischen den zwei Wälzkörpern (11) definiert ist, welche die Bewegung dieses Pendelkörpers (3) bezüglich des Halters (2) führen.

12. Vorrichtung nach Anspruch 8 oder 10, wobei jedes Fenster (19) aufnimmt:
- einen Wälzkörper (11), der mit wenigstens einer zweiten Laufbahn (13) zusammenwirkt, die mit einem der Pendelkörper (3) fest verbunden ist,
- ein Verbindungsorgan (6), das die erste (5) und die zweite (5) Pendelmasse dieses Pendelkörpers (3) zu einem Paar vereinigt,
- wobei der andere Wälzkörper (11) mit wenigstens einer zweiten Laufbahn (13) zusammenwirkt, die mit dem anderen Pendelkörper (3) fest verbunden ist, wobei diese Pendelkörper (3) in Umfangsrichtung benachbart sind, und
- ein Verbindungsorgan (6), das die erste (5) und die zweite (5) Pendelmasse dieses anderen Pendelkörpers (3) zu einem Paar vereinigt.

13. Komponente für ein Kraftübertragungssystem eines Kraftfahrzeugs, wobei die Komponente insbesondere ein Doppeldämpfungsschwungrad, ein hydrodynamischer Drehmomentwandler oder eine Reibkupplungsscheibe ist, oder eine trockene oder nasse Doppelkupplung oder eine nasse Einfachkupplung oder ein mit einer Kurbelwelle fest verbundenes Schwungrad, wobei die Komponente eine Dämpfungsvorrichtung (1) nach einem der Ansprüche 1 bis 12 umfasst.

## Claims

1. Device (1) for damping torsional oscillations, comprising:
- a support (2) able to move rotationally about an axis (X),
- a plurality of pendular bodies (3), each pendular body (3) being able to move with respect to the support (2), and
- a plurality of rolling members (11), each rolling member (11) cooperating with a first runway track (12) secured to the support (2) and with at least a second runway track (13) secured to a pendular body (3), the movement of each pendular body (3) with respect to the support (2) being guided by two of these rolling members (11), the support (2) comprising a plurality of windows (19) in each of which two rolling members (11) are housed, **characterized in that** one of these rolling members (11) collaborates with at least one second runway track (13) secured to one of the pendular bodies (3) and the other of these rolling members (11) collaborates with at least a second runway track (13) secured to another of these pendular bodies (3), said pendular bodies (3) being circumferentially adjacent.

2. Device according to Claim 1, each pendular body (3) comprising two first end-stop damping members (30), each first end-stop damping member (30) projecting circumferentially toward the circumferentially adjacent pendular body (3), so that two first end-stop damping members (30) circumferentially facing one another and respectively belonging to two circumferentially adjacent pendular bodies (3) can come into contact with one another when these pendular bodies (3) move, each first end-stop damping member (30) being arranged in one of the windows (19) of the support (2).

3. Device according to Claim 1, comprising a plurality of synchronizing members (20) connecting circumferentially adjacent pendular bodies (3) together in pairs, each synchronizing member (20) being arranged in one of the windows (19) of the support (2).

4. Device according to any one of the preceding claims, each pendular body (3) comprising at least one second end-stop damping member (25) for butting against the support (2).

5. Device according to any one of the preceding claims, each pendular body (3) comprising:
- a first and a second pendular mass (5) which are spaced from one another axially, the first pendular mass (5) being arranged axially on a first side (4) of the support (2) and the second pendular mass (5) being arranged axially on a second side (4) of the support (2), and
- at least one connecting member (6) connecting the first and second pendular masses (5), pairing said masses.

6. Device according to Claim 5, each pendular body (3) extending angularly over an overall angle (α), measured from the axis of rotation (X) between two circumferential ends (7, 8) which correspond to the circumferential ends of the pendular masses (5) of this body (3), each second runway track (13) being arranged inside an angular sector (β), measured from the axis of rotation (X) and extending from one circumferential end (7, 8) of the pendular body (3) towards the other circumferential end (7, 8) of this pendular body (3), the ratio between this angular sector (β) and the overall angle (α) being comprised between 1/15 and 1/2.

7. Device according to Claim 5 or 6, the second runway track (13) secured to the pendular body (3) being defined by the connecting member (6).

8. Device according to Claim 7, each pendular body (3) comprising two connecting members (6) pairing the first (5) and second (5) pendular masses, each connecting member (6) defining a second runway track (13) collaborating respectively with one of the two rolling members (11) guiding the movement of this pendular body (3) with respect to the support (3).

9. Device according to Claim 5 or 6, each rolling member (11) collaborating with two second runway tracks (13) secured to the pendular body (3), one of these second runway tracks (13) being defined by the first pendular mass (5) and the other of these second runway tracks (13) being defined by the second pendular mass (5).

10. Device according to Claim 9, each pendular body (3) comprising at least one connecting member (6) pairing the first (5) and second (5) pendular mass.

11. Device according to Claim 10, all the connecting members (6) of the pendular body (3) being positioned in the angular space defined between the two rolling members (11) guiding the movement of this pendular body (3) with respect to the support (2).

12. Device according to Claim 8 or 10, each window (19) housing:
- a rolling member (11) collaborating with at least one second runway track (13) secured to one of the pendular bodies (3),
- a connecting member (6) pairing the first (5) and second (5) pendular mass of this pendular body (3),
- the other rolling member (11) collaborating with at least one second runway track (13) secured to the other pendular body (3), the said pendular bodies (3) being circumferentially adjacent, and
- a connecting member (6) pairing the first (5) and the second (5) pendular mass of this other pendular body (3).

13. Component for a motor vehicle transmission system, the component notably being a dual mass flywheel, a hydrodynamic torque converter or a friction clutch disc or a wet or dry double clutch or a single wet clutch or a flywheel secured to a crankshaft, the component comprising a damping device (1) according to any one of Claims 1 to 12.
